# EUROPÄISCHE PATENTANMELDUNG

(11) **EP 2 015 172 A1**
(43) Veröffentlichungstag der Anmeldung: **14.01.2009**
(21) Anmeldenummer: 07400005.0
(22) Anmeldetag: 09.03.2007
(51) Int. Cl.: G06F 7/72

(54) **Verfahren zur Hardware Realisierung des Galois Counter Mode**

(71) Anmelder: DSI Informationstechnik GmbH, 28199 Bremen (DE)
(72) Erfinder: Hinsenkamp, László, 28199 Bremen (DE); Michalik, Harald, 38640 Goslar (DE); Zhou, Gang, 38100 Braunschweig (DE)

(57) **Zusammenfassung**

Es ist bekannt, dass der Galois/Counter Mode (GCM) ein neuer "Mode of Operation" ist. GCM hat zwei wichtige Teile: die Advanced Encryption Standard Verschlüsselung (AES) und der Galois Feld Multiplizierer.

Neu in der vorgeschlagenen Lösung ist das Verfahren für die Hardware Realisierung des GCM, dergestalt, dass die kritische Verzögerung des AES und des Galois Feld Multiplizierers ausgeglichen ist. Anschließend sind die kritische Verzögerung und Komplexität der Komposite-Feld *SubBytes* Transformation optimiert. Durch die optimierten Realisierungen kann man einen effizienten GCM implementieren.

## Beschreibung

Die Erfindung bezieht sich auf ein symmetrisches Verschlüsselungsverfahren das einerseits mit hoher Geschwindigkeit verschlüsseln und andererseits gleichzeitig Authentisieren kann. Galois/Counter Mode (GCM) ist ein neuer "Mode of Operation". Er wurde von David A. McGrew und John Viega vorgeschlagen und als Vorschlag für Normung zur National Institute of Standards and Technology (NIST) eingereicht. Zwei wichtige Komponenten sind in GCM: Die Advanced Encryption Standard (AES) Verschlüsselung und der Galois Feld Multiplizierer. Der AES kann mit dem Komposite-Feld Verfahren implementiert werden und der Multiplizierer kann mit der Karatsuba Algorithmus vereinfacht werden.

Ziel der Erfindung ist, einen effizienten GCM, mit hocher Geschwindigkeit, bzw. mit weniger Flächenaufwand, auf verschiedenen Hardware Plattformen zu implementieren

Neu in der Lösung ist das Verfahren zur Hardware Realisation des GCM, dergestalt, dass die kritische Verzögerung der AES Pipeling-Architektur und des Galois Feld Multiplizierers ausgeglichen ist. Anschließend wird die kritische Verzögerung und Komplexität der Komposite-Feld *SubBytes* Transformation optimiert.

Es gibt zwei Möglichkeiten, die Optimierungen durchzuführen. Die erste ist den AES ohne inner-round Pipelining, die zweite den AES mit inner-round Pipelining zu implementieren.

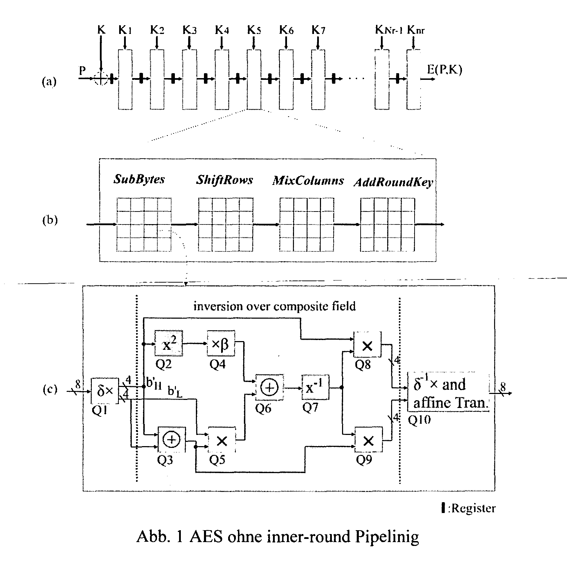

Ohne inner-round Pipelining schließt der AES Nr Blöcke mit Nr 128-Bit Registern ein (Abb. 1), die zwischen den Blöcken eingesetzt werden, wobei Nr die Anzahl der Runden des AES Algorithmus ist. In Abb. 1(a). P, K und Kᵢ; 1 ≤ i ≤ Nr, sind die Klartexte, der Schlüssel bzw. die Teil-Schlüssel. Der Ausgang E(P, K) ist der Cipher-Text. Jeder Block der ersten Nr-1 Blöcke beinhaltet *SubBytes, ShiftRows, MixColumns und Addroundkey* Operationen wie es in Abb. 1(b) gezeigt ist. Der letzte Block hat nur *Subbytes, ShiftRows und Addroundkey* Operationen. Die *SubBytes* Operation wird durch Komposite-Feld Verfahren implementiert (Abb. 1(c)). In Abb. 1(c) δ und δ⁻¹ sind die Umwandlung-Matrixen zwischen dem originalen Feld und dem Komposite-Feld.

Der Block *Q1* wandelt die Elemente aus GF(2⁸) in einen Komposite-Feld GF((2⁴)²) um. Die Blöcke *Q2~Q9* rechnen die Inverse Operation in dem Komposite-Feld. Die Blöcke *Q3* und *Q6* sind die Additionen über GF(2⁴). Die Blöcke *Q5, Q8* und *Q9* sind Multiplikationen über GF(2⁴). Der Block *Q7* ist die Inversion über GF(2⁴). Der Block *Q2* ist die Quadration über GF(2⁴) und der Block *Q4* die Multiplikation mit einer Konstanten über GF(2⁴). Der Block *Q10* wandelt das Element in dem Komposite-Feld in das originale Feld zurück und erzielt die affine Transformation. Kein Register wird in die *SubBytes* Implementierung eingesetzt. Weiterhin können die Operationen über GF(2⁴) durch die Operationen über das Komposite-Feld GF((2²)²) durchgeführt werden.

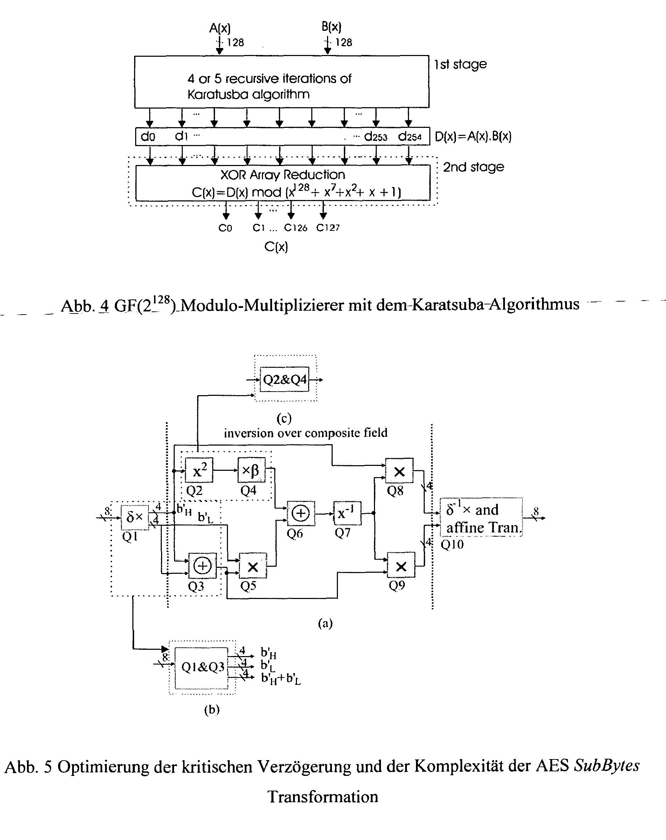

Der Modulo-Multiplizierer (Abb. 4) hat zwei Stufen. Die erste Stufe berechnet das 255-Term Polynom D(x) = A(x)B(x), indem der Karatsuba Algorithmus in 4 oder 5 rekursiven Schritten durchgeführt wird. Danach wird die Modulo-Reduction berechnet.

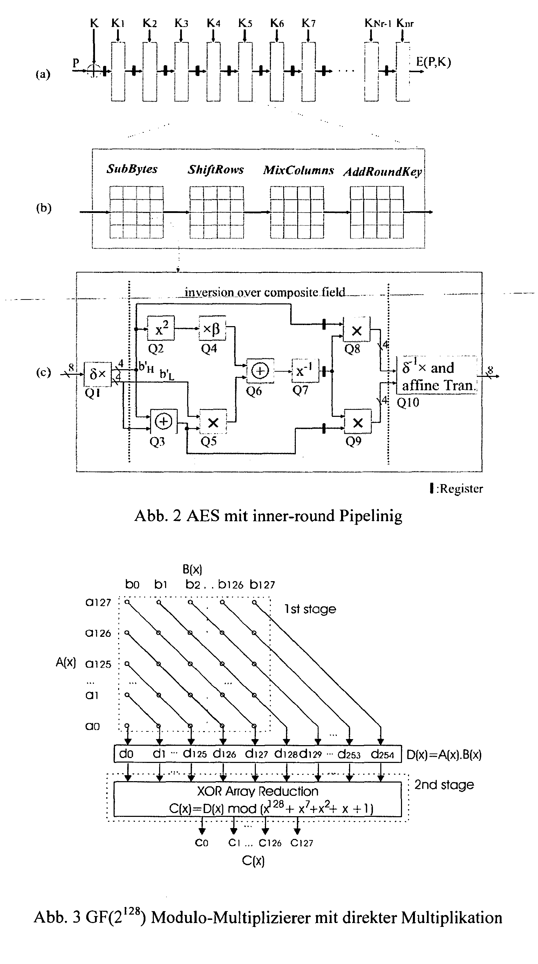

Mit inner-round Pipelining wird der AES mit der direkten Multiplikation (Abb. 2 und Abb. 3) kombiniert. Der AES wird entsprechend der Abb. 2 (c) realisiert. Drei 4-Bit Register werden vor den Blöcken *Q8* und *Q9* eingebracht. Den Modulo-Multiplizierer ohne den Karatsuba Algorithmus zeigt (Abb 3).

Die kritische Verzögerung und die Komplexität der AES *SubBytes* Transformation kann weiter optimiert werden. Die Blöcke *Q1* und *Q3* in Abb. 5 (a) werden gemeinsam realisiert wie es Abb. 5 (b) zeigt. Die Blöcke *Q2* und Q4 in Abb. 5 (a) werden gemeinsam realisiert wie es Abb. 5 (c) zeigt. Die konkrete Optimierung hängt von den Parametern des Komposite-Felds ab.

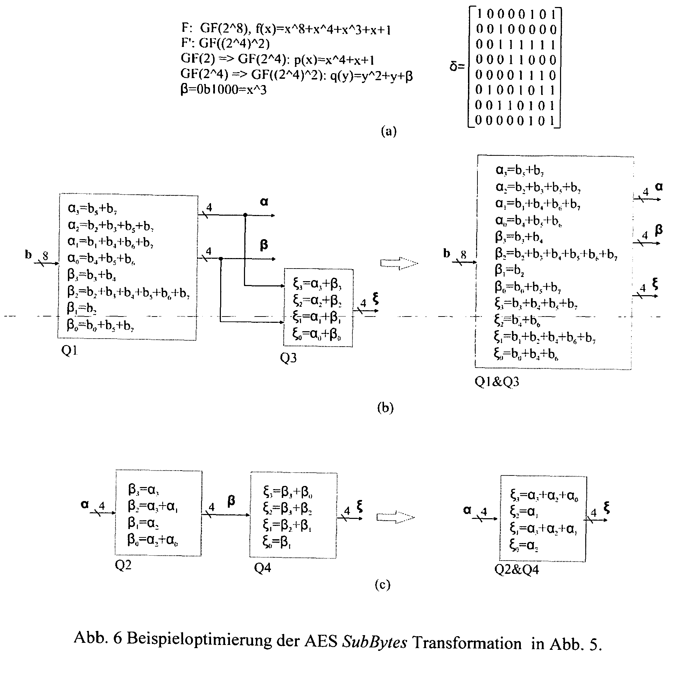

Ein Beispiel der Optimierung wird in Abb. 6 gezeigt. Das Komposite-Feld ist wie es die Abb. 6 (a) zeigt definiert. Die Abb. 6 (b) zeigt wie, *Q1* und *Q3,* zusammen implementiert werden können. Die Abb. 6 (c) zeigt wie, *Q2* und *Q4,* zusammen implementiert werden können.

## Patentansprüche

1. Verfahren zur Hardware Realisierung des GCM, **dadurch gekennzeichnet, dass** der AES ohne inner-round Pipelining Architektur (Abb. 1) in Kombination mit dem Karatusba Algorithmus für die GHASH Funktions-Berechnung angewandt ist.

2. Verfahren zur Hardware Realisierung des GCM, **dadurch gekennzeichnet, dass** der AES mit inner-round Pipelining Architektur (Abb. 2) in Kombination mit der direkten Multiplikation (Abb. 3) für die GHASH Funktions-Berechnung angewandt ist.

3. Verfahren nach Anspruch 1, **dadurch gekennzeichnet, dass** für den Karatusba Algorithmus mehrere rekursive Schritte verwendet werden (Abb. 4).

4. Verfahren nach Anspruch 2, **dadurch gekennzeichnet, dass** für die AES inner-round Pipelining Architektur nur eine Ebene für Innenregister verwendet wird (Abb. 2(c)).

5. Verfahren nach Anspruch 1, Anspruch 2 und Anspruch 4, **dadurch gekennzeichnet, dass** in der Komposite-Feld Implementierung der AES *SubBytes* Transformation die kritische Verzögerung und Komplexität dadurch optimiert sind, dass die Blöcke Q1, Q3 und die Blöcke Q2, Q4 gemeinsam realisiert sind (Abb. 5).
